# EUROPÄISCHE PATENTSCHRIFT

(11) **EP 1 030 121 B1**
(45) Veröffentlichungstag und Bekanntmachung des Hinweises auf die Patenterteilung: **06.09.2006**
(21) Anmeldenummer: 00890041.7
(22) Anmeldetag: 16.02.2000
(51) Int. Cl.: F24D 3/14, F28F 9/18, F16L 41/08, F16L 13/02, F16L 47/02

(54) **Wärmetauscher und Verfahren zur Herstellung desselben**
Heat exchanger and method for making the same
Échangeur de chaleur et méthode pour sa fabrication

(30) Priorität: 16.02.1999 AT 24799
(43) Veröffentlichungstag der Anmeldung: 23.08.2000
(73) Patentinhaber: Schludermann, Arnold, 9500 Villach (AT); Hafner, Gernot, 9462 Bad St. Leonhard (AT); Geist, Friedrich, 3741 Pulkau (AT)
(72) Erfinder: Schludermann, Arnold, 9500 Villach (AT); Hafner, Gernot, 9462 Bad St. Leonhard (AT); Geist, Friedrich, 3741 Pulkau (AT)
(74) Vertreter: Wildhack, Helmut

(56) Entgegenhaltungen:
- EP-A- 0 682 215
- AT-B- 397 300
- DE-A- 4 426 640
- DE-A- 4 433 393
- DE-A- 19 531 548
- US-A- 5 617 992

## Beschreibung

Die Erfindung betrifft einen mit einem Wärmeträgermedium durchströmten Wärmetauscher gemäß dem Oberbegriff des Patentanspruches 1. Des weiteren betrifft die Erfindung ein Verfahren gemäß dem Oberbegriff des Patentanspruches 43 10.

Aus der DE 195 31 548 A1 ist eine Verteilervorrichtung für Heizungsrohre od.dgl. mit einem in einem Verteilerkasten mit rechteckförmigem Querschnitt befestigbaren Verteilerkörper zum Anschließen einer Mehrzahl von Zuleitungen, bekannt, wobei der Verteilerkasten im montierten Zustand hochkant angeordnet ist, der Verteilerkörper langgestreckt ausgebildet und im Verteilerkasten senkrecht befestigbar ist, und wobei der Verteilerkasten eine Mehrzahl von Abgängen aufweist, die zum Befestigen der Zuleistungen im Wege einer Pressverbindung mittels einer Presshülse eingerichtet sind. Aus der EP 682.215 A1 ist ein Rohranschluss bekannt, bei dem eine Anschlussmuffe mechanisch mit einem Rohrende verbunden wird.

Die US 5,617,992 A offenbart einen Wärmetauscher zum Heizen/Kühlen von Räumen mit einem Vorlauf-Sammelrohr, einem Rücklauf-Sammelrohr und sich zwischen diesen Sammelrohren erstreckenden Heizrohren, wobei an den Sammelrohren Aufnahmemuffen ausgebildet sind, die an ihren sammelrohrfernen Ende einen einstückig angeformten Halteflansch aufweisen, der das in die jeweilige Aufnahmemuffe eingeschweißte Rohr umgibt und dessen Innendurchmesser größer ist als der Innendurchmesser der Aufnahmemuffe.

Gemäß dieser US-A ist jedoch vorgesehen, dass gesondertes Schweiß- bzw. Lötmaterial in den Spalt zwischen dem Halteflansch und dem Rohr eingebracht wird und mit demselben das Rohr in den Halteflansch mediumsdicht eingeschweißt wird. Es ist dort nicht vorgesehen, dass die Verscheißung mit dem Rohrmaterial selbst erfolgt.

Bei Wärmetauschern dieser Art besteht das Problem, dass die das Rohrregister bildenden Rohre, die von den Aufnahmemuffen aufgenommen bzw. in diese eingeschweißt sind, in unmittelbarer Nähe der Aufnahmemuffe bei mechanischer Belastung, insbesondere Scherbeanspruchung, bruchgefährdet sind.

Um derartigen Beschädigungen der Heizrohre entgegenzutreten, ist ein Wärmetauscher der eingangs genannten Art erfindungsgemäß durch die im Kennzeichen des Patentanspruches 1 angeführten Merkmale charakterisiert.

Ein erfindungsgemäßes Verfahren zur Herstellung eines Wärmetauschers, mit dem diese Nachteile vermieden werden, ist durch die im Kennzeichen des Patentanspruches 13 angeführten Merkmale charakterisiert.

Es wurde festgestellt, dass im Zuge der Herstellung der Schweißverbindung zwischen der Aufnahmemuffe und dem Endbereich des in die Aufnahmemuffe einzuschweißenden Rohres in dem Endbereich des Rohres, mit dem dieses in eine Heizeinrichtung, insbesondere eine Heizhülse, eingesteckt wird, wobei eine Oberflächenschicht dieses Rohres erweicht bzw. teilweise aufgeschmolzen wird, die beim Extrudieren des Rohres ausgebildete Oberflächenspannung bzw. Festigkeit verlorengeht. Auch wenn dieser Bereich nur mäßig belastet wird, kann ein Ab- bzw. Aufbrechen des Rohres erfolgen. Bei der Herstellung von herkömmlichen Wärmetauschern wird der erweichte bzw. leicht angeschmolzene Endbereich des Rohres in die mit einem Heizdorn erweichte bzw. leicht angeschmolzene Aufnahmemuffe so weit eingesteckt, dass der nicht mehr erwärmte Rohrbereich gerade außerhalb der Aufnahmemuffe zu liegen kommt. In dem am Ende der Aufnahmemuffe liegenden Übergangsbereich zwischen dem nicht erwärmten Rohrbereich, in dem die Rohrfestigkeit noch unverändert vorhanden ist, und dem erwärmten Endbereich mit verminderter Festigkeit, der von der Aufnahmemuffe aufgenommen ist, ist das Rohr nicht voll belastbar. Werden z.B. herkömmliche Wärmetauscher am Boden ausgelegt, um eine Fußbodenheizung zu erstellen, und tritt man auf das Rohrregister, so kommt es unter Umständen zu einem Abbrechen der Rohre unmittelbar vor den Aufnahmemuffen.

Durch die erfindungsgemäße Vorgangsweise bzw. Ausbildung des Halteflansches wird jedes Rohr in dem Übergangsbereich zwischen den beiden unterschiedliche Festigkeiten aufweisenden Bereichen geschützt und eine Relativbewegung mit Bruchgefahr zwischen dem in die Aufnahmemuffe eingesteckten Endbereich und dem außenliegenden Rohrbereich wird minimiert.

Der Halteflansch umgibt das Rohr unter Ausbildung eines Zwischenraumes bzw. in einem geringen Abstand. Vorteilhaft ist es, wenn beim Einstecken des Rohres zum Erwärmen bzw. Erweichen bzw. Anschmelzen in die Heizeinrichtung eine gewisse Oberflächenschicht des Rohres abgetragen und vom Rohrende wegbewegt wird. Dieses abgetragene Material sammelt sich in Form eines Umfangwulstes um das Ende des erwärmten Endereiches an und wird beim Einstecken des Rohres in die Aufnahmemuffe in den Halteflansch eingeführt und verschmiert sich dort über die Innenfläche des Halteflansches und füllt den Zwischenraum zum Rohr, womit sich eine verbesserte Abstützung des Rohres im Halteflansch ergibt.

Der Endereich des Rohres, in dem die Festigkeitswerte abgebaut wurden, ist mit der Aufnahmemuffe derart verschweißt, dass ein Übergang zwischen dem Rohr und der Aufnahmemuffe nicht bzw. fast nicht mehr feststellbar ist. In dem Bereich des Halteflansches ist erkennbar, dass zwischen dem Rohr und dem Halteflansch, welche beide unerwärmt geblieben sind, verschmiertes Kunststoffmaterial vorliegt, welches von dem Endbereich des Rohres, der in der Heizeinrichtung erwärmt wurde, stammt.

Die Ansprüche 2 bis 6 betreffen vorteilhafte Dimensionierungen der Durchmesser der Rohre des Halteflansches und der Aufnahmemuffen im Hinblick darauf, dass von den in die Aufnahmemuffen einzusteckenden erwärmten Rohrenden Material abgetragen und zwischen den Halteflanschen und dem Rohrbereich abgelagert werden soll, der nicht erwärmt wurde und aufgrund dieser Nichterwärmung bezüglich seiner Festigkeitseigenschaften unverändert geblieben ist. Es zeigte sich, dass bei einer mit den üblichen Erwärmungseinrichtungen vorgenommenen Erwärmung des Rohrendes ein Zwischenraum in der angegebenen Dimensionierung bezüglich Dicke und Höhe vollständig mit abgetragenem Material gefüllt werden konnte, so dass eine optimale Abstützung des in die Aufnahmemuffe eingeführten Rohrendes erhalten wird. Unabhängig von den gewählten Rohrdurchmessern bzw. Durchmessern der Halteflansche und Aufnahmemuffen zeigte es sich, dass die angegebenen Dimensionen die gewünschte Abstützwirkung des Rohres erreichen ließen.

Wird die Dicke des Zwischenraumes zwischen dem Rohrende und der Haltemuffe zu groß gewählt, kann dieser Zwischenraum nicht ausreichend mit Material aufgefüllt werden; wird der Zwischenraum zu klein gewählt, so quillt das Material aus dem Halteflansch heraus. Des weiteren war zu berücksichtigen, dass das erwärmte Rohrende bei seinem Einführen in die Aufnahmemuffe keine allzu große Verformung bzw. Materialabtragung erfahren darf, um dadurch hervorgerufene Deformierungen zu vermeiden. Des weiteren zeigte es sich, dass die vorgesehene Höhe des Halteflansches ausreichend ist, um dem Rohr, ungeachtet seiner Dimensionierung, ausreichende Abstützung zu geben.

Um den Halteflansch und die Aufnahmemuffe mit entsprechenden Formwerkzeugen einfach herstellen zu können, sind die Merkmale des Anspruches 7 zweckmäßig. Auch die Merkmale der Ansprüche 8 und 9 tragen für eine einfache Herstellung der Wärmetauscher bei, da diese Teile einfach zu formen und zu entformen sind, ohne dass die Abstützwirkung des Halteflansches darunter leiden würde.

Die angestrebte feste Abstützung eines Rohres ergibt sich, dadurch dass durch Abstützung eines Rohrteiles, bei dem seine durch Extrusion hergestellte Oberflächenspannung bzw. Rohrfestigkeit noch vorhanden bzw. aufrecht und, durch den Halteflansch ein Abbrechen mit größtmöglichster Sicherheit vermieden. Die Merkmale des Anspruches 10 tragen zur bestmögliche Abstützung des Rohrbereiches durch den Halteflansch bei einer gleichzeitigen guten Verbindung des erwärmten Rohrendes mit der Aufnahmemuffe bei.

Vorteilhaft für die erfindungsgemäß vorgesehene Abtragung von Material vom Rohrende ist es, wenn die Merkmale des Anspruches 11 erfüllt sind.

Bevorzugte Ausführungsformen der Erfindung ergeben sich aus der folgenden Beschreibung, den Zeichnungen und den Patentansprüchen.

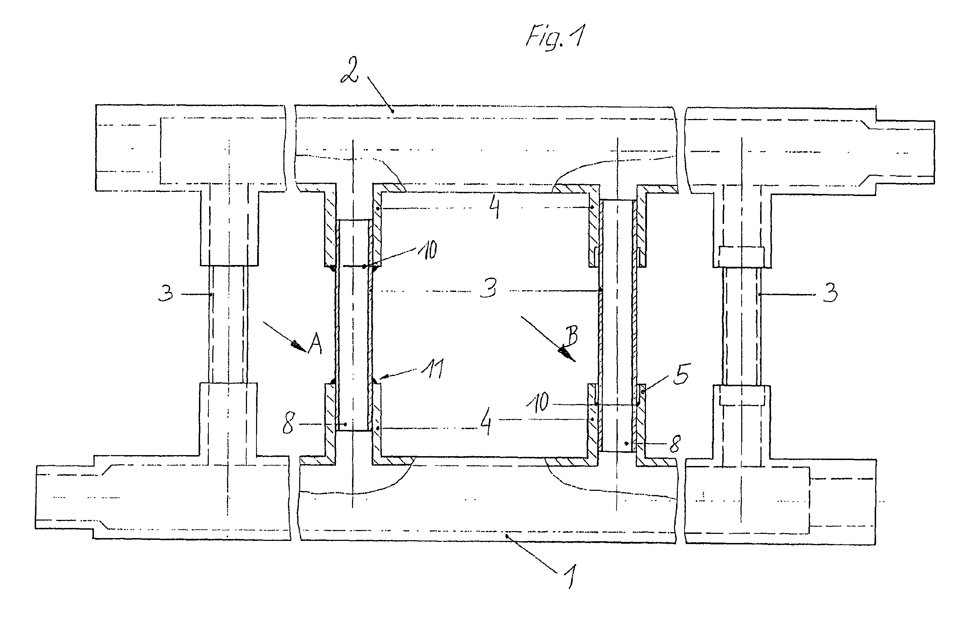

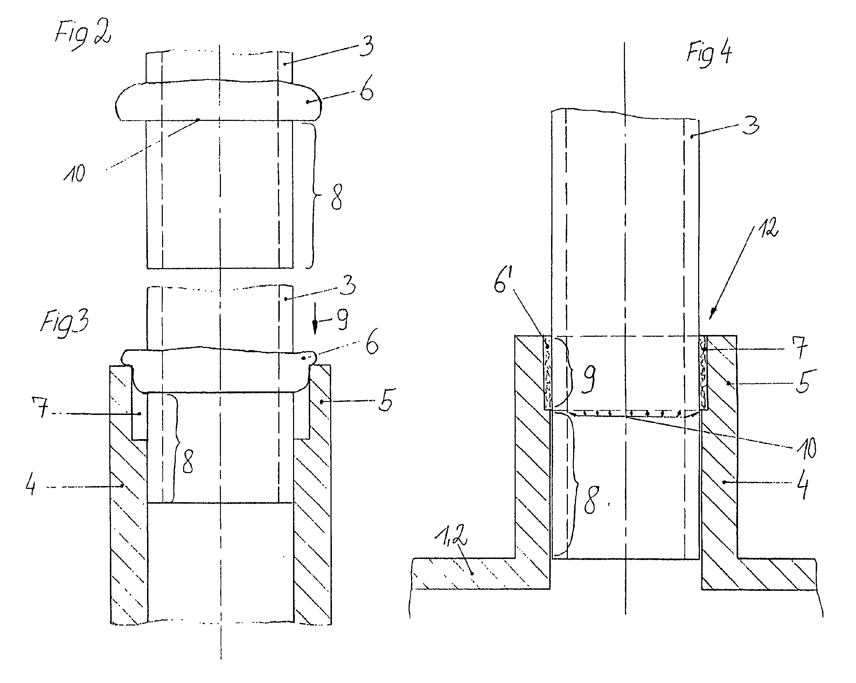

Fig. 1 zeigt schematisch einen Wärmetauscher. Fig. 2 zeigt schematisch einen erwärmten Endbereich eines Rohres. Fig. 3 zeigt das Einführen eines erwärmten Endbereiches eines Rohres in eine mit einem Halteflansch versehene Aufnahmemuffe. Fig. 4 zeigt ein Detail eines erfindungsgemäßen Wärmetauschers.

In Fig. 1 ist schematisch ein Wärmetauscher dargestellt, der einander gegenüberliegend ein Vorlauf-Sammelrohr 1 sowie ein Rücklauf-Sammelrohr 2 aufweist, die über ein Register von Rohren 3 miteinander verbunden sind. Die Sammelrohre 1, 2 tragen Aufnahmemuffen 4, in welche die Rohre 3 eingesteckt und mit den Innenflächen der Aufnahmemuffen 4 verschweißt sind. Zum Verschweißen werden die Rohre 3 in eine (nicht dargestellte) Heizeinrichtung, insbesondere eine Heizhülse, eingesteckt und an der Oberfläche erwärmt bzw. angeschmolzen. In die Aufnahmeöffnungen der Aufnahmemuffen 4 wird ein Heizdom eingesteckt und die Oberfläche der Aufnahmemuffen wird erwärmt bzw. angeschmolzen. Beim Einstecken der erwärmten Endbereiche 8 der Rohre 3 in die erwärmten Aufnahmemuffen 4 erfolgt eine innige Schweißverbindung zwischen diesen beiden Bauteilen. Dies ist in Fig. 1 bei dem links liegenden Rohr 3 gemäß Pfeil A dargestellt. Im Bereich 11 lagert sich Oberflächenmaterial am Rohr 3 bzw. an der Stirnfläche der Aufnahmemuffe 4 ab, das im Zuge des Einbringens des Rohres 3 in die Heizeinrichtung und/oder in die Aufnahmemuffe 4 abgetragen bzw. dorthin verschoben wird. Diese Rohre 3 zeigen im Bereich 10 eine Schwachstelle, in der das Rohr zum Abbrechen bzw. Aufbrechen tendiert.

Bei B ist in Fig. 1 die erfindungsgemäße Vorgangsweise verdeutlicht. Auf die Aufnahmemuffe 4 ist ein ringförmiger Halteflansch 5 aufgesetzt bzw. einstückig mit der Aufnahmemuffe 4 ausgebildet. Dieser Halteflansch 5 verhindert ein Ab- bzw. Aufbrechen des Rohres 3 im Bereich 10, wie im folgenden noch näher erläutert wird.

In Fig. 2 ist schematisch ein Rohr 3 mit einem Endbereich 8 dargestellt, so wie es aus einer hülsenförmigen Heizeinrichtung entnommen wird. Der Endbereich 8 des Rohres 3 ist erwärmt bzw. besitzt eine leicht angeschmolzene Oberfläche. Rohrmaterial ist vom Endbereich 8 abgetragen und in Richtung vom Ende weg verschoben und bildet einen übertrieben groß dargestellten Materialwulst 6, der sich mehr oder weniger regelmäßig um das Rohr 3 herum erstreckt. Um einen derartigen Materialwulst 6 in entsprechender Weise auszubilden, sind der Rohrdurchmesser und der Innendurchmesser der Heizeinrichtung aufeinander abgestimmt, sodass lediglich eine bestimmte geringe Oberflächenschicht vom Rohr 3 abgetragen wird und als Materialwulst 6 vorliegt. In dem Endbereich 8 besitzt das Rohr aufgrund seiner Erwärmung auch nach der darauffolgenden Abkühlung nicht mehr die Oberflächenspannungswerte bzw. -festigkeit bzw. Widerstandsfähigkeit gegen Knicken und Scherbeanspruchungen, wie nach dem Extrudieren.

In Fig. 3 ist das Einschieben eines Rohres 3, so wie es in Fig. 2 dargestellt ist, in eine Aufnahmemuffe 4 dargestellt. Der erwärmte Endbereich 8 ist bereits zum Teil in die Aufnahmemuffe 4 eingeschoben. Der Materialwulst 6 steht bereits in Kontakt mit dem Halteflansch 5. Die Innenfläche des Halteflansches 5 ist im Abstand vom Rohr 3 angeordnet bzw. der Halteflansch 5 weist einen Innendurchmesser auf, der größer ist als der Außendurchmesser des Rohres 3 bzw. der Innendurchmesser der Aufnahmemuffe 4. Der Zwischenraum 7 zwischen der Innenfläche des Halteflansches 5 und der Außenfläche des Rohres 3 wird mit dem Material des Wulstes 6 aufgefüllt bzw. verklebt, wie aus Fig. 4 zu entnehmen ist. Es wird bemerkt, dass der geringfügig geringere Außendurchmesser des Endbereiches 8 des Rohres 3 aufgrund der Materialabtragung zur Bildung des Wulstes 6 in der Zeichnung nicht dargestellt bzw. berücksichtigt wurde, da es sich um relativ kleine Querschnittsveränderungen handelt. In den Fig. 2, 3 und 4 wurde das Ausmaß des Materialwulstes 6 bzw. die Größe des Zwischenraumes 7 bzw. die Durchmesserdifferenz zwischen der Innenfläche des Halteflansches 5 und der Außenmuffe 4 zur Verdeutlichung des Sachverhaltes übertrieben dargestellt.

Fig. 4 zeigt ein in die Aufnahmemuffe 4 mit seinem Endbereich 8 eingeschweißtes Rohr 3, wobei der erwärmte Endbereich 8 zur Gänze von der Aufnahmemuffe 4 aufgenommen ist und wobei der Zwischenraum 7 zwischen dem Halteflansch 5 und dem Rohr 3 mit Kunststoffmaterial 6' ausgefüllt ist. Damit ist die Gefahr eines Bruches im Bereich 10, d.h. des Überganges vom Endbereich 8 zum Rohrbereich 9 ausgeschlossen, da der Halteflansch 5 den Rohrbereich 9 ausreichend abstützt, der bereits im Gegensatz zum Endbereich 8 bzw. zum bisher ungeschützten Bereich 10 eine ausreichende Oberflächenspannung bzw. Festigkeit gegen Beschädigungen aufweist.

Der Übergang zwischen der Innenfläche der Aufnahmemuffe 4 und des Halteflansches 5 kann gerundet bzw. verlaufend ausgebildet sein.

Die Höhe des Halteflansches 5 ist derart auf den Rohrdurchmesser abgestimmt, dass eine ausreichende Abstützung erfolgt, derart, dass unerwünschte Relativbewegungen des außenliegenden Rohres 3 nicht auf den Bereich 10 übertragen werden.

## Patentansprüche

1. Mit einem Wärmeträgermedium durchströmbarer, vorzugsweise im Boden und/oder in den Wänden verlegbarer Wärmetauscher zum Heizen oder Kühlen von Räumen, mit einem Vorlauf-Sammelrohr (1), einem Rücklauf-Sammelrohr (2) und sich zwischen diesen Sammelrohren (1, 2) erstreckenden und an diese angeschlossenen, ein Rohrregister bildenden Rohren (3), wobei an den Sammelrohren (1, 2) Aufnahmemuffen (4) ausgebildet sind, in die die das Rohrregister bildenden Rohre (3) eingesteckt und eingeschweißt sind, wobei die Rohre (3) und die Sammelrohre (1, 2) aus verschweißbarem Kunststoffmaterial, insbesondere Polypropylen, hergestellt sind, wobei die Aufnahmemuffen (4) an ihrem sammelrohrfernen Ende einen einstückig angeformten, ringförmigen, insbesondere zylinderringförmigen, Halteflansch (5) aufweisen, der das in die jeweilige Aufnahmemuffe (4) eingeschweißte Rohr (3) umgibt, wobei der Innendurchmesser des Halteflansches (5) größer als der Innendurchmesser der Aufnahmemuffe (4) und der Außendurchmesser des Rohres (3) ist, **dadurch gekennzeichnet, dass** der Endbereich (8) des Rohres (3), in dem durch Erwärmung für das Einschweißen die Oberflächenspannung abgebaut ist, von der Aufnahmemuffe (4) aufgenommen ist und der Halteflansch (5) einen Bereich (9) des Rohres (3) umgibt, in dem die bei der Herstellung der Rohre (3) durch Extrusion erzielte Oberflächenspannung bzw. Rohrfestigkeit vorhanden bzw. aufrecht geblieben ist, und
dass der Zwischenraum (7) zwischen der Innenfläche des Halteflansches (5) und der Außenfläche des in die Aufnahmemuffe (4) eingesetzten Rohres (3) zumindest teilweise mit dem Rohrmaterial (6') gefüllt, insbesondere verklebt, ist, welches beim Einstecken eines Endbereiches (8) des Rohres (3) in eine Heizeinrichtung, insbesondere Heizhülse, von der Außenfläche des Rohr-Endbereiches (8) abgetragen und im Abstand vom Rohrende zu einem Materialwulst (6) angelagert bzw. zusammengestaucht ist oder beim Einstecken des erwärmten Endbereiches (8) des Rohres (3) in den Halteflansch (5) bzw. in die Aufnahmemuffe (4) von der Außenfläche des Endbereiches (8) abgetragen

2. Wärmetauscher nach Anspruch 1 **dadurch gekennzeichnet, dass** der Innendurchmesser des Halteflansches (5) den Außendurchmesser des Rohres (3) und/oder den Innendurchmesser der Aufnahmemuffe (4) um 5 bis 15 %, vorzugsweise um 8 bis 12 %, überschreitet.

3. Wärmetauscher nach Anspruch 1, **dadurch gekennzeichnet, dass** der Innendurchmesser des Halteflansches (5) den Außendurchmesser des Rohres (3) und/oder den Innendurchmesser der Aufnahmemuffe (4) um 0,5 bis 1,5 mm, vorzugsweise um 0,8 bis 1,2 mm, überschreitet.

4. Wärmetauscher nach einem der Ansprüche 1 bis 3, **dadurch gekennzeichnet, dass** die Höhe des Halteflansches (5) 15 bis 35 %, vorzugsweise 20 bis 30 %, des Außendurchmessers des Rohres (3) beträgt.

5. Wärmetauscher nach einem der Ansprüche 1 bis 4, **dadurch gekennzeichnet, dass** die Höhe des Halteflansches (5) zumindest 3 mm, vorzugsweise 3 bis 10 mm, beträgt.

6. Wärmetauscher nach einem der Ansprüche 1 bis 5, **dadurch gekennzeichnet, dass** die Höhe des Halteflansches (5) 20 bis 30 %, vorzugsweise 23 bis 27 %, der Einschweißtiefe bzw. des erwärmten und in die Aufnahmemuffe (4) eingesteckten Endbereiches (8) des Rohres (3) beträgt.

7. Wärmetauscher nach einem der Ansprüche 1 bis 6, **dadurch gekennzeichnet, dass** die Aufnahmemuffe (4) und der ringförmige Halteflansch (5) bezüglich ein- und derselben Achse, insbesondere der Mittelachse der Aufnahmemuffe (4), zentriert angeordnet sind.

8. Wärmetauscher nach einem der Ansprüche 1 bis 8 7, **dadurch gekennzeichnet, dass** die Außenfläche des von der Aufnahmemuffe (4) und dem Halteflansch (5) gebildeten Körpers einen Zylinder- oder Kegelmantel bildet.

9. Wärmetauscher nach einem der Ansprüche 1 bis 8, **dadurch gekennzeichnet, dass** die Aufnahmemuffe (4) unter Ausbildung eines Absatzes in den Halteflansch (5) übergeht.

10. Verfahren zur Herstellung eines mit einem Wärmeträgermedium durchströmbaren Wärmetauschers zum Heizen oder Kühlen von Räumen, der vorzugsweise in Wänden und/oder im Fußboden verlegt wird, mit einem Vorlauf-Sammelrohr (1), einem Rücklauf-Sammelrohr (2) und sich zwischen diesen Sammelrohren (1, 2) erstreckenden und an diese angeschlossenen, ein Rohrregister bildenden Rohren (3), wobei an den Sammelrohren (1, 2) Aufnahmemuffen (4) ausgebildet werden, in die die das Rohrregister bildenden Rohre (3) nach einer Erwärmung ihrer Endbereiche (8) in einer Heizeinrichtung, insbesondere Heizhülse, eingesteckt und eingeschweißt werden, wobei beim Erwärmen des Endbereiches (8) die beim Extrudieren der Rohre (3) im Zuge ihrer Herstellung aufgebaute Oberflächenspannung bzw. Festigkeit verringert bzw. abgebaut wird, und bei der Herstellung der Sammelrohre (1, 2) am sammelrohrfernen Ende der Aufnahmemuffen (4) einstückig ein ringförmiger Halteflansch (5) angeformt wird, dessen Innendurchmesser größer ist als der Innendurchmesser der Aufnahmemuffe (4) und der Außendurchmesser des Rohres (3) ausgebildet wird und durch den das in die jeweilige Aufnahmemuffe (4) einzuschweißende Rohr (3) durchgesteckt wird, **dadurch gekennzeichnet, dass** im Endbereich (8) der Rohre (3) eine Außenflächenschicht des Rohrmaterials beim Einstecken bzw. Einführen des Rohres (3) in die Heizeinrichtung abgetragen bzw. zu einem das Rohr umgebenden Materialwulst (6) verformt und in einem Abstand vom Ende des Rohres (3) angelagert wird und/oder beim Durchstecken des erwärmten Endbereiches (8) durch den Halteflansch (5) Rohrmaterial abgetragen bzw. zurückgehalten wird und dass der Materialwulst (6) aus erwärmtem Rohrmaterial und/oder das vom Halteflansch (5) zurückgehaltene Material in den Zwischenraum (7) zwischen dem an den erwärmten Endbereich (8) des Rohres (3) anschließenden, nicht erwärmten Rohrbereich (9) und dem nicht erwärmten Halteflansch (5) eingebracht und verteilt und der Zwischenraum (7) zumindest teilweise mit diesem Rohrmaterial (6') ausgefüllt bzw. verklebt wird.

11. Verfahren nach Anspruch 10, **dadurch gekennzeichnet, dass** das Rohr (3) mit seinem erwärmten und bezüglich Oberflächenspannung bzw. Festigkeit reduzierte Werte aufweisenden Endbereich (8) in die Aufnahmemuffe (4) eingesteckt und mit dieser verschweißt wird, wobei der Übergang von dem durch Erwärmen reduzierte Oberflächenspannung aufweisenden Endbereich (8) zu dem unerwärmt gebliebenen Rohrbereich (9) mit herstellungsgemäßen Oberflächenspannungswerten im Bereich des Überganges (10) bzw. Absatzes von der Aufnahmemuffe (4) zum Halteflansch (5) platziert wird.

## Claims

1. A heat exchanger, which is able to be flown through by a heat carrier medium, and is preferably enabled to be installed in the floor and/or in walls, for heating or cooling rooms, comprising a supply manifold (1), a reflux manifold (2) and a pipe register forming pipes (3) which extend between said manifolds (1, 2) and are connected to them, wherein, on said manifolds (1, 2), receiving sleeves (4) are formed into which the pipes (3) forming a pipe register are inserted and welded, said pipes (3) and said manifolds (1, 2) being produced of a weldable plastic material, particularly of polypropylene, wherein said receiving sleeves (4), at that one of their ends which is remote from said manifolds, comprise an integrally formed, annular, and in particular cylindrical, holding flange (5) which surrounds the pipe (3) welded into the respective receiving sleeve (4), the inner diameter of the holding flange (5) being larger than the inner diameter of the receiving sleeve (4) and the outer diameter of the pipe (3), **characterised in that** the end region (8) of said pipe (3), where the surface tension is degraded due to heating for welding it in, is received by the receiving sleeve (4), and the holding flange (5) surrounds a region (9) of the pipe (3), where the surface tension or pipe strength, attained by the production of the pipes (3) by means of extrusion, is still present and maintained, and that the clearance (7) between the inner surface of the holding flange (5) and the outer surface of the pipe (3) inserted into said receiving sleeve (4) is at least partially filled with that pipe material (6'), in particular cemented, which is removed from the outer surface of the pipe's end region (8) when inserting the end region (8) of the pipe (3) into a heating device, particularly into a heating sleeve, and is accumulated and jolted together in a distance from the pipe's end to form a bead of material (6), or is removed from the outer surface of said end region (8) when inserting the heated end region (8) of the pipe (3) into the holding flange (5) or receiving sleeve (4).

2. Heat exchanger according to claim 1, **characterised in that** the inner diameter of the holding flange (5) exceeds the outer diameter of the pipe (3) and/or the inner diameter of the receiving sleeve (4) by 5 to 15 %, preferably by 8 to 12 %.

3. Heat exchanger according to claim 1, **characterised in that** the inner diameter of the holding flange (5) exceeds the outer diameter of the pipe (3) and/or the inner diameter of the receiving sleeve (4) by 0.5 to 1.5 mm, preferably by 0.8 to 1.2 mm.

4. Heat exchanger according to any of claims 1 to 3, **characterised in that** the height of the holding flange (5) amounts to 15 to 35 %, preferably to 20 to 30 %, of the outer diameter of the pipe (3).

5. Heat exchanger according to any of claims 1 to 4, **characterised in that** the height of the holding flange (5) amounts to at least 3 mm, preferably to 3 to 10 mm.

6. Heat exchanger according to any of claims 1 to 5, **characterised in that** the height of the holding flange (5) amounts to 20 to 30 %, preferably to 23 to 27 %, of the welding depth or of the heated end region (8) of the pipe (3) inserted into the receiving sleeve (4).

7. Heat exchanger according to any of claims 1 to 6, **characterised in that** the receiving sleeve (4) and the annular holding flange (5) are centred with respect to one and the same axis, particularly the centre axis of the receiving sleeve (4).

8. Heat exchanger according to any of claims 1 to 7, **characterised in that** the outer surface of the body, formed by the receiving sleeve (4) and the holding flange (5), is an envelope of a cylinder or of a cone.

9. Heat exchanger according to any of claims 1 to 8, **characterised in that** the receiving sleeve (4) has a shouldered transition into the holding flange (5).

10. A method for making a heat exchanger, which is able to be flown through by a heat carrier medium, for heating or cooling rooms, and which is preferably installed in walls and/or in the floor, comprising a supply manifold (1), a reflux manifold (2) and a pipe register forming pipes (3) which extend between said manifolds (1, 2) and are connected to them, wherein on said manifolds (1, 2) receiving sleeves (4) are formed into which the pipes (3) forming a pipe register may be inserted and welded after heating their end regions (8) in a heating device, particularly in a heating sleeve, wherein the surface tension or strength built up during extruding the pipes (3) in the course of their production, is decreased or degraded when heating the end region (8), and wherein, during production of the manifolds (1, 2) at that end of the receiving sleeves (4) which is remote from the manifolds, an annular holding flange (5) is integrally shaped whose inner diameter is larger than the inner diameter of the receiving sleeve (4) and the outer diameter of the pipe (3), and through which the pipe (3) to be welded into the respective receiving sleeve (4) is inserted, **characterised in that** an outer surface layer of the pipe material is removed in the end region (8) of the pipes (3) during insertion or introduction of the pipe (3) into the heating device, or is deformed to a bead of material (6) surrounding the pipe, and is accumulated in a distance from the end of the pipe (3) and/or pipe material is removed or retained when introducing the heated end region (8) through the holding flange (5), and that the bead of material (6) of heated pipe material and/or the material retained by the holding flange (5) is inserted into the clearance (7) between that pipe region (9), which is joining the heated end region (8) of the pipe (3) and is not heated, and the holding flange (5), not heated, and is distributed, and the clearance (7) is at least partially filled or cemented with this pipe material (6').

11. Method according to claim 10, **characterised in that**, the heated end region (8) of the pipe (3), having reduced values with respect to surface tension or strength, is introduced into the receiving sleeve (4) and is welded therewith, wherein the transition from the end region (8), which has a reduced surface tension due to heating, to the pipe's region (9) which remained non-heated and has surface tension values in accordance with the production, is placed in the region of the transition (10) or shoulder from the receiving sleeve (4) to the holding flange (5).

## Revendications

1. Echangeur de chaleur, qui est adapté à être circulé par un agent caloporteur, et qui, de préférence, est capable d'être installé dans le plancher et/ou dans des parois, pour chauffer ou refroidir des locales, comprenant un collecteur d'alimentation (1), un collecteur de reflux (2) et des tuyaux (3), qui s'étendent entre ces collecteurs (1, 2) et sont reliés à ceux-ci en formant un registre de tuyaux, dans lequel, aux collecteurs (1, 2), des manchons de logement (4) sont formés, dans lesquels les tuyaux (3), qui forment le registre de tuyaux, sont introduits et soudés, les tuyaux (3) et les collecteurs (1, 2) étant produits d'une matière plastique soudable, particulièrement du polypropylène, et dans lequel le bout des manchons de logement (4), loin des collecteurs, comprend une flasque de soutien (5) intégralement ajouté, annulaire et, particulièrement, cylindrique, qui entoure le tuyau (3) soudé dans le manchon de logement (4) respectif, le diamètre intérieur de la flasque de soutien (5) étant plus grand que le diamètre intérieur du manchon de logement (4) et que le diamètre extérieur du tuyau (3), **caractérisé en ce, que** la zone finale (8) du tuyau (3), dans laquelle la tension superficielle a été dégradée par le chauffage pour le soudage, est logée par le manchon de logement (4), et le flasque de soutien (5) entoure une zone (9) du tuyau (3), dans laquelle la tension superficielle ou la résistance du tuyau, atteintes lors de la production des tuyaux (3) par extrusion, sont encore présentes et maintenues, et que l'interstice (7) entre la surface intérieure de la flasque de soutien (5) et la surface extérieure du tuyau (3) introduit dans le manchon de logement (4) est au moins partiellement rempli avec le matériau du tuyau (6'), et est particulièrement collé, qui est dénudé de la surface extérieure de la zone finale (8) du tuyau lors de l'introduction d'une zone finale (8) du tuyau (3) dans un dispositif de chauffage, particulièrement dans une douille chauffante, et est accumulé ou comprimé ensemble à une distance du bout de tuyau à former un bouding de matériau, ou est dénudé de la surface extérieure de la zone finale (8) lors de l'introduction de la zone finale (8) chauffée du tuyau (3) dans la flasque de soutien (5) ou dans le manchon de logement (4).

2. Echangeur de chaleur selon la revendication 1, **caractérisé en ce, que** le diamètre intérieur de la flasque de soutien (5) dépasse le diamètre extérieur du tuyau (3) et/ou le diamètre intérieur du manchon de logement (4) par 5 à 15 %, préférablement par 8 à 12%.

3. Echangeur de chaleur selon la revendication 1, **caractérisé en ce, que** le diamètre intérieur de la flasque de soutien (5) dépasse le diamètre extérieur du tuyau (3) et/ou le diamètre intérieur du manchon de logement (4) par 0,5 à 1,5 mm, préférablement par 0,8 à 1,2 mm.

4. Echangeur de chaleur selon une quelconque des revendications 1 à 3, **caractérisé en ce, que** l'hauteur de la flasque de soutien (5) se monte à 15 à 35 %, préférablement à 20 à 30 %, du diamètre extérieur du tuyau (3).

5. Echangeur de chaleur selon une quelconque des revendications 1 à 4, **caractérisé en ce, que** l'hauteur de la flasque de soutien (5) se monte à au moins 3 mm, préférablement à 3 à 10 mm.

6. Echangeur de chaleur selon une quelconque des revendications 1 à 5, **caractérisé en ce, que** l'hauteur de la flasque de soutien (5) se monte à 20 à 30 %, préférablement à 23 à 27 %, de la profondeur de soudage ou de la zone finale (8) du tuyau (3) chauffée et introduite dans le manchon de logement (4).

7. Echangeur de chaleur selon une quelconque des revendications 1 à 6, **caractérisé en ce, que** le manchon de logement (4) et la flasque annulaire de soutien (5) sont disposés d'une façon centrée par rapport à un seul et même axe, particulièrement l'axe central du manchon de logement (4).

8. Echangeur de chaleur selon une quelconque des revendications 1 à 7, **caractérisé en ce, que** la surface extérieure du corps formé par le manchon de logement (4) et la flasque de soutien (5) forme un corps de cylindre ou de cône.

9. Echangeur de chaleur selon une quelconque des revendications 1 à 8, **caractérisé en ce, que** le manchon de logement (4) se converti en la flasque de soutien en formant un gradin.

10. Méthode pour la fabrication d'un échangeur de chaleur, qui est adapté à être circulé par un agent caloporteur, pour chauffer ou refroidir des locales, qui de préférence, est installé dans des parois et/ou dans le plancher, et qui comprend un collecteur d'alimentation (1), un collecteur de reflux (2) et des tuyaux (3), qui s'étendent entre ces collecteurs (1, 2) et sont reliés à ceux-ci en formant un registre de tuyaux, dans lequel, aux collecteurs (1, 2), des manchons de logement (4) sont formés, dans lesquels les tuyaux (3), qui forment le registre de tuyaux, sont introduits et soudés après un chauffage de ces zones finales (8) dans un dispositif de chauffage, particulièrement dans une douille chauffante, la tension superficielle ou résistance, développée lors de l'extrusion des tuyaux (3) au cours de leur fabrication, étant réduite ou dégradée lors du chauffage de la zone finale (8), et, lors de la fabrication des collecteurs (1, 2) au bout des manchons de logement (4), loin des collecteurs, on forme intégralement une flasque annulaire (5), dont le diamètre intérieur est plus grand, que le diamètre intérieur du manchon de logement (4) et que le diamètre extérieur du tuyau (3), et à travers duquel le tuyau (3) à soudé est introduit dans le manchon de logement (4) respectif, **caractérisée en ce, que**, dans la zone finale (8) des tuyaux (3), une surface extérieure du matériau de tuyau est dénudée lors de l'introduction ou l'insertion du tuyau (3) dans le dispositif de chauffage ou est déformée à former un boudin de matériau (6) entourant le tuyau, et est accumulé à une distance du bout du tuyau (3) et/ou que du matériau de tuyau est dénudé et retenu lors de l'introduction de la zone finale (8) chauffée à travers de la flasque de soutien (5), et que le boudin de matériau retenu (6) du matériau de tuyau chauffé et/ou le matériau retenu par la flasque de soutien (5) est introduit et distribué dans l'interstice (7) entre la zone (9) de tuyau, qui n'est pas chauffée, et qui joint la zone finale (8) chauffée du tuyau (3), et la flasque de soutien (5) sans chauffage, et que l'interstice (7) est au moins partiellement rempli par ce matériau de tuyau (6') ou collé.

11. Méthode selon la revendication 10, **caractérisée en ce, que** la zone finale (8) chauffée et ayant des valeurs réduits par rapport à la tension superficielle ou la résistance du tuyau (3) est introduit dans le manchon de logement (4) et est soudé avec celle-ci, la transition de la zone finale (8), ayant une tension superficielle réduite par le chauffage, à la zone de tuyau (9), qui a été restée sans chauffage et ayant des valeurs de tension superficielle selon la production est placée dans la zone de la transition (10) ou le gradin à partir du manchon de logement (4) à la flasque de soutien (5).
